# EUROPÄISCHE PATENTANMELDUNG

(11) **EP 1 061 343 A1**
(43) Veröffentlichungstag der Anmeldung: **20.12.2000**
(21) Anmeldenummer: 00112463.5
(22) Anmeldetag: 10.06.2000
(51) Int. Cl.: G01D 5/246

(54) **Positionssensor für ein Kraftfahrzeug**

(30) Priorität: 15.06.1999 DE 19927152
(71) Anmelder: Hella KG Hueck & Co., 59552 Lippstadt (DE)
(72) Erfinder: Irle, Henning, 59557 Lippstadt (DE); Schmidt, Franz-Josef, 33154 Salzkotten (DE); Kost, Norbert, 59590 Geseke (DE)

(57) **Zusammenfassung**

Beschrieben wird ein Positionssensor für ein Kraftfahrzeug, welcher als Sensorsignal ein positionsabhängig variierendes pulsweitenmoduliertes Signal erzeugt, bei dem der Gesamtmeßbereich des Positionssensor in mehrere gleichartige, aufeinanderfolgende Meßbereiche unterteilt ist. Der erfindungsgemäße Positionssensor löst die Aufgabe, einen fehlerfreien Übergang zwischen aufeinanderfolgenden Meßbereichen zu ermöglichen.

## Beschreibung

Die Erfindung betrifft einen Positionssensor für ein Kraftfahrzeug, welcher als Sensorsignal ein positionsabhängig variierendes pulsweitenmoduliertes Signal erzeugt.

Ziel der Erfindung ist, einen über einen weiten Winkel- oder Wegbereich messenden Positionsgeber mit einer besonders hohen Auflösung zu schaffen. Um Sensorsignale über einen großen Positionsbereich mit großer Genauigkeit zu kodieren, können hochauflösende Meßwandler, wie z.B. Analog-Digitalwandler verwendet werden. Solche Wandler sind im Kraftfahrzeugbereich aber konzeptionell eher ungebräuchlich und benötigen einen relativ hohen Applikationsaufwand, insbesondere zur Anpassung an die Sensoren. Zudem sind sie vergleichsweise kostenaufwendig.

Eine andere Möglichkeit besteht darin, den Gesamtmeßbereich in mehrere gleichartige Meßbereiche zu unterteilen. Um die geforderte hohe Genauigkeit zu erzielen, ist ein fehlerfreier Übergang von einem Meßbereich zum nächsten zwingend erforderlich. Bei einer analogen Signalerzeugung ist dies praktisch nicht möglich, weil bereits ein kleiner Jitter an einer Umschaltgrenze zu unakzeptablen Fehlern führt. Die üblichen Positionssensoren, welche als Sensorsignal ein positionsabhängig variierendes pulsweitenmoduliertes Signal (im folgenden auch kurz als PWM-Signal bezeichnet) erzeugen, sind ebenfalls nicht geeignet, da sie keinen Signalbereich von 0% bis 100% zulassen.

Es ist somit die Aufgabe der Erfindung einen Positionssensor zu schaffen, der einen fehlerfreien Übergang zwischen aufeinanderfolgenden Meßbereichen ermöglicht.

Diese Aufgabe wird erfindungsgemäß durch die kennzeichnenden Merkmale des Anspruches 1 gelöst.

Der erfindungsgemäße Sensor weist also über den gesamten Signalbereich (z.B. Drehbereich eines Winkelsensors über 360°) mehrere sich wiederholende Meßbereiche ohne Lücken auf und liefert den Weg- oder Winkelmeßwert in Form eines pulsweitenmodulierten Signals. Als Besonderheit ist zu nennen, daß dieses pulsweitenmodulierte Meßsignal bei Über- oder Unterschreiten des Meßbereiches nicht in eine PWM-Begrenzung übergeht. Diese Begrenzung ist bei üblichen Positionssensoren erforderlich, weil PWM-Verhältnisse von 0% oder 100% Gleichspannungswerten entsprechen und keine PWM-Messung mehr zulassen.

Um dennoch einen unterbrechungsfreien Wechsel von einem Meßbereich in den nächsten zu ermöglichen, wird zu dem eigentlichen Meßwert vor der PWM-Umwandlung ein entsprechender fester Offsetwert addiert, so daß beispielsweise bei einem Meßwert von 0% der PWM-Wert dem Minimalwert (= Offsetwert von z.B. 12,5%) entspricht. Darüber hinaus wird der maximal möglich PWM-Wert bestimmt, indem Offsetwert + maximaler Meßwert z.B. nur 87,5% des möglichen PWM-Wertes erreichen.

Der zu übertragende Meßwert liegt bei einer beispielhaften Ausführung eines erfindungsgemäßen Positionssensors in digitaler Form in einem Wertebereich von 0 bis 3071 (= 0h bis 0B FFh ⇔ 0% bis 75% PWM) vor. Der oben beschriebene Offsetwert kann besonders einfach mit einem Wert von 2 00h (⇔ 1/8 = 12,5% PWM) zum Meßwert addiert und in einem 12-Bit Speicher für die PWM-Erzeugung abgelegt werden. Der Wertebereich des 12-Bit Speichers geht von 0 bis 4095 (= Oh bis 0F FFh ⇔ 0 bis 100% PWM).

Durch die Summenbildung von Meßwert und Offsetwert kann ein PWM-Wert von 2 00h (⇔ 1/8 = 12,5% PWM) nicht unterschritten und ein PWM-Wert von 0D FFh (⇔ 7/8 = 87,5% PWM) nicht überschritten werden. Zur PWM-Erzeugung wird der Inhalt des 12-Bit Speichers mit dem Inhalt eines frei laufenden 12-Bit Zählers verglichen. Ist der Speicherinhalt größer als der Zählerinhalt, wird ein logischer HIGH-Pegel ausgegeben.

Im Empfänger wird das PWM-Verhältnis bestimmt und ausgewertet. Insbesondere wird dabei der Offsetwert von 1/8 = 12,5% wieder subtrahiert. Damit liegt das Ergebnis wieder in bereinigter Form in dem ursprünglichen Wertebereich von 0 bis 3071 vor. Störimpulse, die kürzer sind als 12,5% PWM können eindeutig erkannt und ausgefiltert werden.

Der beschriebene Aufbau und die Funktionsweise eines erfindungsgemäßen Sensors ist besonders für Positionssensoren, also Weg- und Winkelsensoren vorteilhaft, da von diesen, insbesondere bei speziellen sicherheitskritischen Anwendungen in Kraftfahrzeugen, sehr hohe Auflösungen und Genauigkeiten gefordert werden. Selbstverständlich können aber auch Sensoren für andere Anwendungen gemäß dem erfindungsgemäßen Aufbau hergestellt werden.

## Patentansprüche

1. Positionssensor für ein Kraftfahrzeug,
welcher als Sensorsignal ein positionsabhängig variierendes pulsweitenmoduliertes Signal erzeugt,
**dadurch gekennzeichnet**,
- daß der Gesamtmeßbereich des Positionssensor in mehrere gleichartige, aufeinanderfolgende Meßbereiche unterteilt ist,
- daß der Positionssensor zu seinem digitalisiertem Meßwert einen festen Offsetwert addiert, wobei die Summe aus dem minimal möglichen Meßwert und dem Offsetwert eines pulsweitenmodulierten Signals mit einem minimalen Modulationsgrad, der größer ist als 0%, entspricht und die Summe aus dem maximal möglichen Meßwert und dem Offsetwert einem pulsweitenmodulierten Signal mit einem maximalen Modulationsgrad, der kleiner ist als 100%, entspricht.

2. Positionssensor nach Anspruch 1, dadurch gekennzeichnet, daß der Empfänger des pulsweitenmodulierten Signals von dem aus dem demodulierten Signal erhaltenen Meßwert den Offsetwert subtrahiert.

3. Positionssensor nach Anspruch 1, dadurch gekennzeichnet, daß das pulsweitenmodulierte Signal durch einen Vergleicher erzeugt wird, der einen logischen Highpegel ausgibt, wenn die Summe aus dem digitalen Sensormeßwert und dem Offsetwert den Inhalt eines frei laufenden Digitalzählers übersteigt.
